(19) Europäisches Patentamt

European Patent Office

Office européen des brevets

(11) **EP 0 645 740 B1**

(12) **FASCICULE DE BREVET EUROPEEN**

(45) Date de publication et mention
de la délivrance du brevet:
**03.06.1998 Bulletin 1998/23**

(51) Int Cl.⁶: **G07B 17/04**, H02M 3/335

(21) Numéro de dépôt: **94402079.1**

(22) Date de dépôt: **19.09.1994**

(54) **Machine à affranchir comportant un circuit de verrouillage de sécurité**

Frankiermaschine mit einer Schaltung zur Sicherheitsverriegelung

Franking machine comprising a security locking circuit

(84) Etats contractants désignés:
**DE FR GB NL**

(30) Priorité: **24.09.1993 FR 9311395**

(43) Date de publication de la demande:
**29.03.1995 Bulletin 1995/13**

(73) Titulaire: **NEOPOST INDUSTRIE**
**F-92220 Bagneux (FR)**

(72) Inventeur: **Meur, Jean-Pierre**
**F-91620 La Ville du Bois (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
EP-A- 0 086 396          EP-A- 0 099 571
EP-A- 0 432 603          EP-A- 0 484 610
US-A- 4 421 977

## Description

L'invention porte sur une machine de traitement de courrier comprenant un dispositif d'alimentation électrique destiné à alimenter au moins un moteur de commande, et un circuit de verrouillage de sécurité relié électriquement à un contacteur de capot de la machine et coopérant avec le dispositif d'alimentation électrique en vue de couper cette alimentation lors de l'ouverture du capot de la machine (EP-A-0 099 571).

Les machines de traitement de courrier, telles que les machines à affranchir sont maintenant couramment utilisées dans les entreprises et bureaux de postes.

Les constructeurs de machines à affranchir cherchent à les rendre de plus en plus sophistiquées pour répondre aux besoins des utilisateurs de ces machines. Notamment, un souci des constructeurs est d'offrir aux utilisateurs des machines ayant un grand nombre de fonctionnalités.

L'augmentation du nombre de fonctionnalités ou fonctions de commande d'une machine à affranchir se traduit par une augmentation du nombre de moteurs de commande nécessaires à la mise en oeuvre de telles fonctionnalités. Ces moteurs sont généralement des moteurs à courant continu.

Jusqu'à présent, les moteurs de commande sont alimentés par un dispositif d'alimentation électrique en courant continu d'un type conventionnel comprenant un redresseur, un circuit primaire et un circuit secondaire. Pour répondre aux besoins précités des utilisateurs, il est donc nécessaire de prévoir un dispositif d'alimentation en courant continu adapté pour fournir une énergie suffisante à tous les moteurs de commande. Il en résulte qu'un tel dispositif d'alimentation en courant continu devient d'autant plus lourd et encombrant qu'il y a de moteurs de commande à servir.

Par ailleurs, les machines à affranchir doivent être homologuées pour pouvoir être mises en service. L'homologation se traduit par la présence d'un circuit de verrouillage de sécurité relié à un contacteur de capot de la machine et coopérant avec le dispositif d'alimentation électrique. Ce circuit de verrouillage de sécurité a pour fonction de couper l'alimentation électrique lorsque le capot de la machine est ouvert. En effet, des zones de la machine accessibles à un opérateur, lorsque le capot est ouvert, peuvent présenter un risque potentiel de danger mécanique et électrique.

Jusqu'à présent, le circuit homologué au sens des normes UL, CSA, BSI consiste en un dispositif électromécanique tel qu'un interrupteur, contacteur, relais, lui-même homologué, câblé en série avec le dispositif d'alimentation. Il peut être situé en amont, en aval ou dans ce dispositif d'alimentation. L'augmentation du nombre de moteurs de commande nécessite alors l'utilisation d'un composant électromécanique encombrant et coûteux car devant avoir un fort pouvoir de coupure.

D'un autre côté, les utilisateurs de machines à affranchir attendent des constructeurs de telles machines, des machines ayant un encombrement le plus faible possible de sorte à en faire des outils de bureau.

Le but de l'invention est de proposer une machine de traitement de courrier, telle qu'une machine à affranchir, comprenant un dispositif d'alimentation électrique susceptible de servir un grand nombre de moteurs de commande montés dans celle-ci, et un circuit de verrouillage de sécurité répondant aux conditions d'une homologation et ne requérant aucun composant électromécanique extérieur, la machine conservant un encombrement compatible avec les attentes des utilisateurs.

A cet effet, l'invention a pour objet une machine de traitement de courrier caractérisée par un dispositif d'alimentation électrique à découpage comprenant au moins un circuit hacheur de puissance ayant une commande, et en ce que le circuit de verrouillage de sécurité comprend au moins un relais électromécanique reliant électriquement le circuit hacheur de puissance à sa commande, et constituant un mécanisme intégré de mise en/hors service homologué.

Les dispositifs d'alimentation électrique à découpage sont bien connus (voir p. ex. EP-A-0 484 610 ou EP-A-0 432 603). Ils procurent un gain appréciable en poids et en encombrement par rapport aux dispositifs d'alimentation électrique classiquement utilisés dans les machines à affranchir. Un dispositif d'alimentation du type Forward convient particulièrement bien pour de telles machines de traitement de courrier, car il peut délivrer en sortie une puissance jusqu'à 400W permettant de servir un nombre appréciable de moteurs électriques fonctionnant en basse tension, environ 24V, à des puissances comprises entre 16 et 100W.

Le relais électromécanique peut être choisi avec un faible pouvoir de coupure et constitue un compromis encombrement/coût optimal pour assurer la coupure d'alimentation électrique. Par ailleurs, une machine à affranchir équipée d'un tel circuit de verrouillage de sécurité répond aux conditions d'homologation.

De plus cette solution permet d'éviter le rajout de composants électromécaniques extérieurs tels que des interrupteurs, contacteurs, relais, pour assurer les fonctions de commande de moteurs d'entraînement.

L'invention est décrite en détail ci-après en référence aux figures.

La figure 1 représente schématiquement une machine à affranchir équipée d'un dispositif d'alimentation et d'un circuit de verrouillage de sécurité selon l'invention.

La figure 2 montre plus en détail le dispositif d'alimentation et le circuit de verrouillage de sécurité.

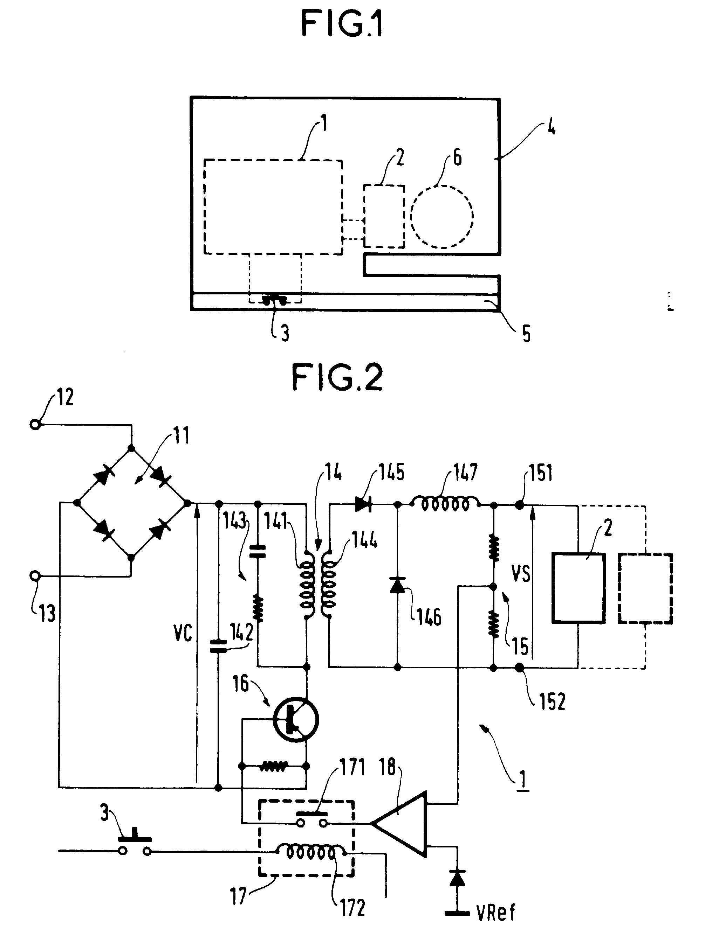

Sur la figure 1, une machine à affranchir est montrée équipée d'un dispositif d'alimentation électrique 1 prévu pour être relié au réseau et servant un ou plusieurs moteurs de commande de la machine, un seul 2 étant représenté. Le moteur 2 sert par exemple à l'entraînement de la tête d'impression de la machine à affranchir. La machine à affranchir comprend encore un contacteur 3 servant à couper l'alimentation électrique lorsque le capot 4 de la machine est soulevé de la base 5 de celle-ci.

Sur la figure 2, le dispositif d'alimentation électrique représenté est du type Forward. Il comprend un pont de diodes 11 dont les entrées 12,13 sont prévues pour être reliées au réseau électrique et dont la fonction est de redresser le courant alternatif fourni par le réseau électrique en courant continu. Les sorties du pont de diodes sont reliées à un transformateur 14 ayant un primaire 141 équipé d'un condensateur de filtrage 142 et un réseau RC 143, un secondaire 144 équipé de deux diodes de redressement 145,146 et d'une self de lissage de tension 147. Le secondaire est suivi d'un pont diviseur 15. Le ou les moteurs de commande 2 sont reliés en parallèle aux sorties 151,152 du pont diviseur.

Le transformateur est équipé aussi d'un circuit de hachage 16 constitué d'un transistor et d'une résistance. La base du transistor est reliée à une borne d'un contact 171 d'un relais électromécanique 17 tandis que l'autre borne du contact du relais est reliée à la sortie d'un amplificateur 18 servant de commande au circuit de hachage. L'amplificateur 18 reçoit en entrée une tension de référence VRef et une tension provenant du pont diviseur 15.

Le relais 17 comprend enfin une bobine de commande 172 qui agit sur le contact 171 pour ouvrir ou fermer la ligne entre l'amplificateur 18 et le circuit de hachage 16. La self 172 est reliée en série au contacteur 3 de capot au sein d'un circuit électrique comprenant une alimentation électrique auxiliaire non représentée.

Le fonctionnement du dispositif d'alimentation et du circuit de verrouillage de sécurité est le suivant.

L'amplificateur 18 délivre des signaux de durée t variable (fonction de l'écart entre une fraction de la tension de sortie VS du pont diviseur 15 et la tension VRef) et de période T fixe.

La tension de sortie VS du pont diviseur est liée à la tension d'entrée VC et au rapport t/T sous la forme:

$$VS = VC \times t/T.$$

Quand le contacteur 3 est fermé (capot fermé), le relais 17 est activé (fermé) et l'amplificateur 18 délivre normalement des signaux de commande au transistor. Le moteur 2 est alimenté en courant.

Lorsque le relais 17 est désactivé (ouvert) par l'ouverture du contacteur 3 (quand le capot 4 est séparé de la base 5), les signaux de commande issus de l'amplificateur 18 ne sont plus transmis au transistor et de même au primaire 141 du transformateur 14. La variation de flux devient nulle de sorte que le secondaire ne produit pas de tension pour le moteur 2 (la résistance dans le circuit de commande 1 fixant le potentiel de la base du transistor).

Par ailleurs, si le transistor est en court-circuit, le primaire du transformateur est alimenté en permanence (le courant dans le primaire n'étant limité que par la résistance du circuit RC). Il n'y a toujours pas de variation de flux, donc pas de tension en sortie du secondaire. Si le transistor est non passant, il n'y a pas non plus de tension en sortie du secondaire.

Une telle configuration homologable permet de disposer d'une puissance en sortie suffisante pour alimenter plusieurs moteurs de commande, cette alimentation pouvant être coupée par un relais de faible pouvoir de coupure.

Bien entendu, le dispositif d'alimentation à découpage peut comporter, en variante, plusieurs relais électromécaniques homologués associés respectivement à plusieurs circuits hacheurs de commande.

## Revendications

1. Une machine de traitement de courrier comprenant un dispositif d'alimentation électrique (1) destiné à alimenter au moins un moteur de commande (2), et un circuit de verrouillage de sécurité relié électriquement à un contacteur (3) de capot de la machine et coopérant avec le dispositif d'alimentation électrique en vue de couper cette alimentation lors de l'ouverture du capot de la machine, caractérisée par un dispositif d'alimentation électrique à découpage comprenant au moins un circuit hacheur de puissance (16) ayant une commande (18), et en ce que le circuit de verrouillage de sécurité comprend au moins un relais électromécanique (17) reliant électriquement le circuit hacheur de puissance à sa commande.

2. Machine de traitement de courrier selon la revendication 1, caractérisée en ce que le au moins un circuit hacheur de puissance comporte en outre un transistor et une résistance connectés à le au moins un relais électromécanique.

3. Machine de traitement de courrier selon la revendication 2, caractérisée en ce que le au moins un relais électromécanique comporte un contact (171) et une bobine de commande (172) qui est montée en série avec le contacteur de capot (3) et commande l'ouverture/fermeture du contact (171) qui couple électriquement le transistor et la résistance au circuit de commande (18).

4. Machine de traitement de courrier selon la revendication 3, caractérisée en ce que ladite alimentation électrique de puissance comporte en outre un pont diviseur (15) relié à une entrée du circuit de commande (18).

5. Machine de traitement de courrier selon la revendication 4, caractérisée en ce qu'elle comprend en outre une tension de référence (Vref) qui est délivrée au circuit de commande (18), lequel délivre des signaux au contact (171) sur la base de la tension provenant du pont diviseur (15) et de la tension de référence.

## Patentansprüche

1. Maschine zur Postverarbeitung mit einer elektrischen Stromversorgungsvorrichtung (1), die mindestens einen Steuermotor (2) speisen soll, und mit einer Sicherheitsverriegelungsschaltung, die elektrisch mit einem Kontakt (3) der Abdeckhaube der Maschine verbunden ist und mit der elektrischen Stromversorgungsvorrichtung so zusammenwirkt, daß die Stromversorgung unterbrochen wird, wenn die Abdeckhaube der Maschine geöffnet wird, gekennzeichnet durch eine elektrische Stromversorgungsvorrichtung von Zerhackertyp mit mindestens einer Leistungszerhackerschaltung (16), die eine Steuerung (18) besitzt, und dadurch, daß die Sicherheitsverriegelungsschaltung mindestens ein elektromechanisches Relais (17) enthält, das die Leistungszerhackerschaltung elektrisch mit deren Steuerung verbindet.

2. Postverarbeitungsmaschine nach Anspruch 1, dadurch gekennzeichnet, daß die zumindest eine Leistungszerhackerschaltung außerdem einen Transistor und einen Widerstand besitzt, die mit dem zumindest einen elektromechanischen Relais verbunden sind.

3. Postverarbeitungsmaschine nach Anspruch 2, dadurch gekennzeichnet, daß das zumindest eine elektromechanische Relais einen Kontakt (171) und Steuerwicklung (172) enthält, wobei letztere in Reihe mit dem Kontakt (3) der Abdeckhaube (3) geschaltet ist und das Öffnen und Schließen des Relaiskontakts (171) steuert, über den der Transistor und der Widerstand an die Steuerschaltung (18) elektrisch gekoppelt sind.

4. Postverarbeitungsmaschine nach Anspruch 3, dadurch gekennzeichnet, daß die elektrische Leistungsstromversorgung außerdem eine Teilerbrücke (15) enthält die an einen Eingang der Steuerschaltung (18) angeschlossen ist.

5. Postverarbeitungsmaschine nach Anspruch 4 dadurch gekennzeichnet daß sie weiter eine Bezugsspannung (VRef) enthält, die an die Steuerschaltung (18) geliefert wird, welche Signale an den Relaiskontakt (171) auf der Grundlage der Spannungen liefert, die von der Teilerbrücke (15) bzw. der Bezugsspannung kommen.

## Claims

1. A mail-processing machine including an electrical power supply (1) for powering at least one control motor (2), and a safety locking circuit electrically connected to a cover switch (3) of the machine and co-operating with the electrical power supply to switch the power supply off whenever the cover of the machine is open, said machine being characterised by a chopper electrical power supply comprising at least one power chopper circuit (16) having a control (18), and in that the safety locking circuit includes at least one electromechanical relay (17) electrically connecting the power chopper circuit to its control.

2. Mail-processing machine according to claim 1, characterised in that at least one power chopper circuit further comprises a transistor and a resistor that are connected to at least one electromechanical relay.

3. Mail-processing machine according to claim 2, characterised in that at least one electromechanical relay comprises a contact (171) and a control coil (172) that is connected in series with the cover switch (3) and controls the opening/closing of the contact (171) which electrically couples the transistor and the resistor to the control circuit (18).

4. Mail-processing machine according to claim 3, characterised in that said electrical power supply further comprises a divider bridge (15) connected to an inlet of the control circuit (18).

5. Mail-processing machine according to claim 4, characterised in that it further comprises a reference voltage (Vref) that is delivered to the control circuit (18), with said circuit delivering signals to the contact (171) on the basis of the voltage coming from the divider bridge (15) and of the reference voltage.

# FIG.1

# FIG.2